# EUROPÄISCHE PATENTSCHRIFT

(11) **EP 3 303 079 B1**
(45) Veröffentlichungstag und Bekanntmachung des Hinweises auf die Patenterteilung: **09.12.2020**
(21) Anmeldenummer: 16728217.7
(22) Anmeldetag: 23.05.2016
(51) Int. Cl.: B60T 10/02, C08L 77/00, F16D 57/04

(54) **GEHÄUSEBAUTEIL EINES GEHÄUSES EINER DRUCKMITTEL FÜHRENDEN VORRICHTUNG EINES FAHRZEUGS**
HOUSING COMPONENT OF A HOUSING OF A VEHICLE DEVICE CONDUCTING PRESSURE MEDIUM
ÉLÉMENT DE CARTER D'UN CARTER D'UN DISPOSITIF ACHEMINANT UN FLUIDE SOUS PRESSION DANS UN VÉHICULE

(30) Priorität: 26.05.2015 DE 102015108210
(43) Veröffentlichungstag der Anmeldung: 11.04.2018
(73) Patentinhaber: KNORR-BREMSE Systeme für Nutzfahrzeuge GmbH, 80809 München (DE)
(72) Erfinder: GREBE, Jan, 82319 München (DE); WERNER, Kai, 71638 Ludwigsburg (DE)
(86) Internationale Anmeldenummer: PCT/EP2016/000852
(87) Internationale Veröffentlichungsnummer: WO 2016/188630

(56) Entgegenhaltungen:
- WO-A1-2008/106631
- WO-A1-2010/139369
- WO-A1-2012/084712
- WO-A1-2014/199045
- WO-A1-2015/011001
- DE-U1-202012 008 860
- FR-A1- 2 681 840

## Beschreibung

### Stand der Technik

Die Erfindung geht aus von einem Gehäusebauteil eines Gehäuses einer Druckmittel führenden Vorrichtung eines Fahrzeugs mit wenigstens einer mit einem Innengewinde versehenen Anschlussbohrung zum Einschrauben eines mit einem Außengewinde versehenen Anschlusselements, zum Zu- und/oder Abführen des Druckmittels von oder zu der Vorrichtung, gemäß dem Oberbegriff von Anspruch 1.

Eine Befestigung des beispielsweise mit einer Druckmittelleitung verbundenen Anschlusselements an dem Gehäusebauteil des Gehäuses erfolgt demnach dadurch, dass das Anschlusselement in die Anschlussbohrung eingeschraubt wird. Dann kann in der Druckmittelleitung geführtes Fluid, insbesondere Druckluft oder Hydraulikflüssigkeit von der Druckmittelleitung in das Innere des Gehäusebauteils bzw. des Gehäuses fließen und in umgekehrter Richtung.

Ein Problem bei solchen Schraubverbindungen zwischen einem Anschlusselement und einer Anschlussbohrung eines Gehäusebauteils besteht darin, dass insbesondere die Anschlussbohrung in dem Gehäusebauteil Materialeigenschaften aufweisen muss, welche ein derartig hohes Anzugs- und Lösemoment der Gewindeverbindung zulässt, dass sich die Gewindeverbindung auch unter extremen Temperaturen und Rüttelbelastung nicht löst.

Eine gattungsgemäßes Gehäusebauteil ist beispielsweise aus DE 10 2008 028 440 A1 bekannt. Dort ist ein zwei solche Anschlussbohrungen für Zu- und Abfuhr von Druckluft aufweisendes Gehäusebauteil eines Gehäuses eines ABS-Drucksteuerventils ein Leichtmetall-Spritzgussformling und insbesondere ein Aluminium-Druckgussbauteil. Zwar lassen die Materialeigenschaften eines solchen Aluminium-Druckgussbauteils relativ hohe Anzugs- und Lösemomente für Schraubverbindungen zu, jedoch ist es relativ teuer in der Herstellung.

Weitere Beispiele sind aus den DE 10 2016 101910 A1 bzw. EP 1 591 675 A2 bekannt.

Der vorliegenden Erfindung liegt die Aufgabe zugrunde, ein Gehäusebauteil der eingangs erwähnten Art derart fortzubilden, dass es bei kostengünstiger Herstellung eine sichere Schraubverbindung zwischen dem Anschlusselement der Druckmittelleitung und der Anschlussbohrung gewährleisten kann.

Diese Aufgabe wird erfindungsgemäß durch die Merkmale von Anspruch 1 gelöst.

### Offenbarung der Erfindung

Unter einem Gehäusebauteil soll ein separates Bauteil eines Gehäuses verstanden werden, in welchem weitere, beliebige Bauelemente der Druckmittel führenden Vorrichtung zumindest teilweise aufgenommen sind. Zusammen mit wenigstens einem weiteren Gehäusebauteil, z.B. einem Deckel kann das Gehäusebauteil dann ein vollständiges Gehäuse ausbilden, in dem die Gehäusebauteile aneinander oder an einem Gehäuserahmen befestigt sind. Alternativ kann das Gehäusebauteil auch das einzige Gehäusebauteil des Gehäuses darstellen, etwa in dem Fall, in dem die von dem Gehäuse aufgenommenen Bauteile mit dem PPA (Polyphthalamid)-Kunststoff umspritzt werden.

Im Bereich der Anschlussbohrung bedeutet, dass die Wandung des Gehäusebauteils, welches einer direkten Belastung durch die Schraubverbindung zwischen dem Anschlusselement und der Anschlussbohrung ausgesetzt ist, aus PPA (Polyphthalamid) besteht. Vorzugsweise ist das gesamte Gehäusebauteil ein Spritzgussformling aus PPA (Polyphthalamid). Alternativ kann auch nur ein Abschnitt des Gehäusebauteils im Bereich der Anschlussbohrung aus PPA (Polyphthalamid) gefertigt und ein weiterer Abschnitt aus einem anderen Material, z.B. aus Aluminium oder PA-(Polyamid) Kunststoff gefertigt und mit einem Anschlussbohrungs-Abschnitt aus PPA (Polyphthalamid) verbunden sein.

Erfindungsgemäß ist daher vorgesehen, dass das Material des Gehäusebauteils wenigstens im Bereich der Anschlussbohrung aus einem Thermoplast in Form von PPA (Polyphthalamid) besteht. Dieses Material weist Materialeigenschaften insbesondere im Hinblick auf E-Modul und Materialsteifigkeit auf, dass Schraubverbindungen zwischen dem Anschlusselement und der Anschlussbohrung mit einem Anzugs- und Lösemoment hergestellt werden können, welches auch nach einer hohen und zeitlich ausgedehnten Temperaturbelastung, wie z.B. 85°C bei 250h oder einer der Arrheniusbeziehung folgenden äquivalenten Belastung, wie sie im Fahrzeug auftritt, größer als 25% des Bruchmoments ist. Ein hohes Anzugs- und Lösemoment wirkt sich wiederum positiv auf den Widerstand gegenüber einem Lösen der Schraubverbindung vor allem im Hinblick auf extreme Temperaturen und Rüttelbelastung aus. Handelsnamen für PPA (Polyphthalamid) sind beispielsweise EMS Grivory® HTV5 H1 oder Dupont Zytel®. Die Produktbezeichnung des PPA (Polyphthalamid) nach ISO 1874 ist insbesondere PA6T/61, MH, 12-190, GF 50.

Insbesondere liegt das Bruchmoment eines solchen Kunststoffs bei einer M16-Anschlussbohrung bei ca. 95 Nm, das Anzugsmoment bei 70 Nm und das Lösemoment nach Alterung bei 30 Nm.

Der oben beschriebene Thermoplast hat im Gegensatz zu PA (Polyamid) die Eigenschaft, dass er unter Dauerbelastung mit hohen Flächenpressungen durch die Verschraubung und auch durch Temperatureinflüsse weniger erweicht oder kriecht, so dass das Gehäusebauteil auch unter einer solchen Belastung weitgehend maßhaltig bleibt. Insbesondere ist in dem erfindungsgemäß ausgestalteten Gehäusebauteil dann keine Gewindebuchse aus Metall vorhanden, die eine Anschlussbohrung für das Anschlusselement aufweist bzw. keine solche Gewindebuchse aus Metall notwendig.

Durch die in den Unteransprüchen aufgeführten Maßnahmen sind vorteilhafte Weiterbildungen und Verbesserungen der in Anspruch 1 angegebenen Erfindung möglich.

Gemäß einer Weiterbildung ist das Gehäusebauteil vollständig aus dem PPA (Polyphthalamid)-Kunststoff gefertigt, insbesondere als Spritzgussformling.

Vorzugsweise kann der PPA (Polyphthalamid)-Thermoplast faserverstärkt sein, was zu einer noch höheren Festigkeit führt. Insbesondere ist eine Glasfaserverstärkung vorgesehen, insbesondere mit 30-65 Gew.-% Glasfaserverstärkung.

Insbesondere weist der PPA (Polyphthalamid)-Thermoplast wenigstens einige der folgende Eigenschaften auf: Einen Zug-E-Modul von wenigstens 17500 MPa, eine Bruchfestigkeit von wenigstens 240 MPa, eine Bruchdehnung von 2%, eine Schlagzähigkeit von 80 kJ/m², eine Kerbschlagzähigkeit von 11 kJ/ m², eine Kugeldruckhärte von wenigstens 340 Mpa, eine Schmelztemperatur von wenigstens 325° C, eine Formbeständigkeit HDT/A bis wenigstens 285° C, eine thermische Längenausdehnung längs von höchstens 0,15 10⁻⁴/K, eine thermische Längenausdehnung quer von höchstens 0,40 10⁻⁴/K, eine Dichte von wenigstens 1,65 g/cm³, eine Wasseraufnahme von höchstens 3,0 %, eine Feuchtigkeitsaufnahme von höchstens 1,3 %.

Gemäß einer Weiterbildung kann das Gehäusebauteil wenigstens ein integriertes Schraubauge zum Durchführen einer Schraube oder eines Bolzens zur Befestigung der Vorrichtung an einer Struktur des Fahrzeugs aufweisen, wobei das Material wenigstens im Bereich des Schraubauges aus dem Thermoplast in Form von PPA (Polyphthalamid) besteht.

Zur Befestigung des Gehäusebauteils bzw. des Gehäuses an dem Fahrzeug wird durch das wenigstens eine Schraubauge eine Schraube oder Gewindebolzen gesteckt und in eine Gewindebohrung z.B. an der Struktur des Fahrzeugs eingeschraubt. Dabei werden die Schraube bzw. der Gewindebolzen mit einem Anzugsmoment festgezogen, welches gewährleistet, dass sich die Schraubverbindung nach mehr als 250 Stunden bei 85 Grad Celsius und/oder fünfzig Temperaturwechseln zwischen minus 40 Grad und 85 Grad und/oder zwei Stunden bei minus 40 Grad und/oder einer Beschleunigung von mehr als 5g und/oder einem Rüttelprofil nach ISO ausgesetzt, nicht löst. Das hierfür relativ hohe Anzugsmoment wird dann auch über einen längeren Zeitraum aufrechterhalten, weil der PPA (Polyphthalamid)-Thermoplast, aus welchem das Gehäusebauteil zumindest im Bereich des wenigstens einen Schraubauges gefertigt ist, demgegenüber nicht kriecht oder erweicht.

Besonders bevorzugt weist eine Druckmittel führende Einrichtung eines Fahrzeugs wenigstens ein Gehäuse mit wenigstens einem oben beschriebenen Gehäusebauteil auf.

Ein besonders kostengünstig fertigbares Gehäuse ergibt sich, wenn neben dem einen Gehäusebauteil wenigstens ein weiteres Gehäusebauteil oder sämtliche Gehäusebauteile des Gehäuses der Druckmittel führenden Einrichtung aus dem PPA (Polyphthalamid)-Thermoplast (besteht) bestehen.

Die Druckmittel führende Einrichtung ist insbesondere eine Druckluft oder Hydraulikflüssigkeit als Druckmittel führende Ventileinrichtung und eine der folgenden Ventileinrichtungen: Ein ABS-Drucksteuerventil, ein ASR-(Antriebsschlupfregelung) Ventil, ein Relaisventil, ein Mehrwegeventil, ein Mehrwege-Magnetventil, ein Bremsventil, ein Luftaufbereitungsventil, ein Auxiliary-Ventil, ein Anhänger-EBS-Ventil, ein Zugfahrzeug-EBS-Ventil, ein Kupplungssteller.

Insbesondere wird die Druckmittel führende Einrichtung durch ein ABS-Drucksteuerventil einer Betriebsbremseinrichtung eines Fahrzeugs gebildet, welches eine erste Anschlussbohrung zur Zufuhr des Druckmittels von einer Druckmittelquelle und eine zweite Anschlussbohrung zum Abführen des Druckmittels in einen druckmittelbetätigten Bremsaktuator aufweist.

### Zeichnung

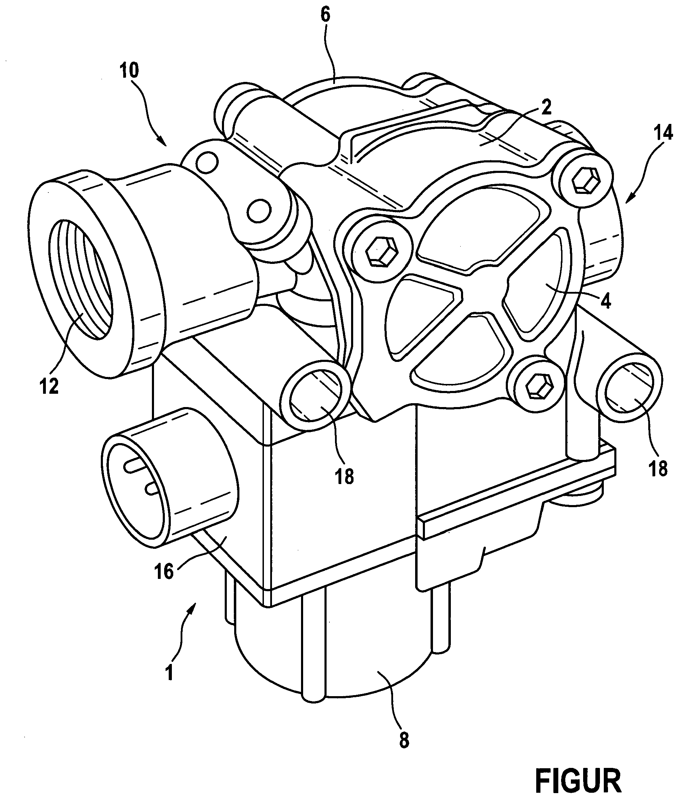

Die Erfindung wird nachstehend anhand eines Ausführungsbeispiels unter Bezugnahme auf die beigefügte Zeichnung näher beschrieben. Es zeigt die einzige Figur eine perspektivische Darstellung eines ABS-Drucksteuerventils als bevorzugtes Ausführungsbeispiel der Erfindung.

### Beschreibung des Ausführungsbeispiels

Das in der Figur gezeigte ABS-Drucksteuerventil 1 als bevorzugtes Ausführungsbeispiel der Erfindung hat die Aufgabe, während einer Blockierneigung des ihm zugeordneten gebremsten Rades bei einer Bremsung den Bremsdruck in dem Rad anzupassen. Das ABS-Drucksteuerventil 1 ist hierzu einerseits an eine Bremsdruck erzeugende Quelle (z.B. Betriebsbremswertgeber) und andererseits an einen Bremsaktuator, z.B. einen Bremszylinder angeschlossen und kann hierzu den in ihn eingesteuerten Bremsdruck durchsteuern, halten oder senken. Das ABS-Drucksteuerventil 1 ist hier beispielsweise Bestandteil einer elektro-pneumatischen Betriebsbremseinrichtung eines Nutzfahrzeugs. In der Figur ist das ABS-Drucksteuerventil 1 in Gebrauchslage gezeigt, d.h. in der Figur oben angeordnete Bauteile sind im z.B. an einem Rahmen eines Nutzfahrzeugs montierten Zustand des ABS-Drucksteuerventils auch oben angeordnet.

Das ABS-Drucksteuerventil weist mehrere Gehäuseteile auf, hier beispielsweise ein oberes Gehäuseteil 2 mit zwei seitlichen Deckeln 4, 6 und ein unteres Gehäuseteil 8, welche zusammen das Gehäuse 10 des ABS-Drucksteuerventils 1 bilden. In dem oberen Gehäuseteil 2 sind zwei mit einem Innengewinde versehene Anschlussbohrungen 12, 14 vorhanden. Diese Anschlussbohrungen 12, 14 dienen jeweils zum Einschrauben eines hier nicht gezeigten Anschlusselements mit einem komplementären Außengewinde, wobei die Anschlusselemente jeweils mit einer Druckmittel, hier Druckluft führenden Leitung verbunden sind.

Insbesondere dient eine erste Anschlussbohrung 12 zum Einschrauben bzw. Anschluss eines ersten Anschlusselements, welches über eine Pneumatikleitung beispielsweise an einen Kanal eines Druckregelmoduls der elektro-pneumatischen Betriebsbremseinrichtung angeschlossen ist. Über diese erste Anschlussbohrung 12 erfolgt dann die Zufuhr von Druckluft. Die zweite Anschlussbohrung 14 dient zum Einschrauben bzw. Anschluss eines zweiten Anschlusselements, welches über eine Pneumatikleitung beispielsweise an einen pneumatischen Betriebsbremszylinder der elektro-pneumatischen Betriebsbremseinrichtung angeschlossen ist. Über diese zweite Anschlussbohrung 14 erfolgt dann die Abfuhr von Druckluft.

In dem Gehäuse 10 sind zwei durch Federelemente belastete Membrane aufweisende Membranventile sowie von einem externen elektronischen ABS-Steuergerät ansteuerbare elektromagnetische Steuerventile zum Vorsteuern der Membranventile aufgenommen. Über eine elektrische Anschlusseinrichtung 16, die in einer Ausnehmung des Gehäuses 10 aufgenommen ist, erfolgt die elektrische Verbindung der elektromagnetischen Steuerventile mit dem ABS-Steuergerät. Der Aufbau eines solchen ABS-Drucksteuerventils ist hinreichend bekannt und beispielsweise in DE 10 2008 028 440 A1 ausführlich beschrieben.

Das ABS-Drucksteuerventil 1 ist hier beispielsweise Bestandteil einer elektro-pneumatischen Betriebsbremseinrichtung eines Nutzfahrzeugs, insbesondere eines elektronisch bremsdruckgeregelten Bremssystems (EBS).

Weiterhin weist das Gehäuse 10 beispielsweise in dem oberen Gehäuseteil 2 beispielsweise zwei Schraubaugen 18 auf, wobei Mittelachsen der Schraubaugen 18 beispielsweise parallel zueinander angeordnet sind. Die Schraubaugen 18 bilden in dem oberen Gehäuseteil 2 Durchgangsöffnungen, d.h. sie erstrecken sich von einer Gehäuseteilseite bis zu der von der einen Gehäuseteilseite abgewandten anderen Gehäuseteilseite. Besonders bevorzugt ist bei den Schraubaugen das Verhältnis zwischen dem Außendurchmesser (Da) und dem Innendurchmesser (di) kleiner als 2,2. Alternativ könnte wenigstens ein Schraubauge 18 auch an einem von dem Gehäuse 10 weg ragenden plattenförmigen Flansch ausgebildet sein.

Wenigstens das obere Gehäuseteil 2 ist vollständig aus PPA (Polyphthalamid)-Kunststoff gefertigt, insbesondere ist es aus diesem Thermoplast spritzgegossen. Beispielsweise kann der PPA (Polyphthalamid)-Thermoplast auch faserverstärkt sein, insbesondere glasfaserverstärkt. Insbesondere ist eine Glasfaserverstärkung mit 30-65 Gew.-% Glasfaserverstärkung vorgesehen. Bevorzugt sind alle Gehäuseteile 2, 4, 6, 8 aus PPA (Polyphthalamid)-Thermoplast hergestellt.

Insbesondere weist der PPA (Polyphthalamid)-Thermoplast wenigstens einige der folgende Eigenschaften auf: Einen Zug-E-Modul von wenigstens 17500 MPa, eine Bruchfestigkeit von wenigstens 240 MPa, eine Bruchdehnung von 2%, eine Schlagzähigkeit von 80 kJ/m², eine Kerbschlagzähigkeit von 11 kJ/ m², eine Kugeldruckhärte von wenigstens 340 Mpa, eine Schmelztemperatur von wenigstens 325° C, eine Formbeständigkeit HDT/A bis wenigstens 285° C, eine thermische Längenausdehnung längs von höchstens 0,15 10⁻⁴/K, eine thermische Längenausdehnung quer von höchstens 0,40 10⁻⁴/K, eine Dichte von wenigstens 1,65 g/cm³, eine Wasseraufnahme von höchstens 3,0 %, eine Feuchtigkeitsaufnahme von höchstens 1,3 %.

Zur Befestigung des ABS-Drucksteuerventils an einem Rahmen des Nutzfahrzeugs werden durch die Schraubaugen 18 Schrauben oder Gewindebolzen gesteckt und in Gewindebohrungen am Rahmen des Nutzfahrzeugs eingeschraubt. Weiterhin werden die pneumatischen Leitungen über die Anschlusselemente an den Anschlussbohrungen 12, 14 durch Einschrauben der Anschlusselemente in die Anschlussbohrungen 12, 14 angeschlossen

Dabei werden die Schrauben bzw. Gewindebolzen und Anschlusselemente mit einem Anzugsmoment festgezogen, welches gewährleistet, dass sich die Schraubverbindungen nach mehr als 250 Stunden bei 85 Grad Celsius und/oder fünfzig Temperaturwechseln zwischen minus 40 Grad und 85 Grad und/oder zwei Stunden bei minus 40 Grad und/oder einer Beschleunigung von mehr als 5g und/oder einem Rüttelprofil nach ISO ausgesetzt, nicht lösen. Das hierfür relativ hohe Anzugsmoment wird dann auch über einen längeren Zeitraum aufrechterhalten, weil der PPA (Polyphthalamid)-Thermoplast, aus welchem wenigstens das obere Gehäuseteil 2 gefertigt ist, demgegenüber eine geringe Neigung zum Kriechen oder erweichen aufweist.

### Bezugszeichenliste

- 1: ABS-Drucksteuerventil
- 2: oberes Gehäuseteil
- 4: Deckel
- 6: Deckel
- 8: unteres Gehäuseteil
- 10: Gehäuse
- 12: erste Anschlussbohrung
- 14: zweite Anschlussbohrung
- 16: Anschlusseinrichtung
- 18: Schraubaugen

## Patentansprüche

1. Gehäusebauteil (2) eines Gehäuses (10) einer Druckmittel führenden Vorrichtung (1) eines Fahrzeugs mit wenigstens einer mit einem Innengewinde versehenen Anschlussbohrung (12, 14) zum Einschrauben eines mit einem Außengewinde versehenen Anschlusselements, zum Zu- und/oder Abführen des Druckmittels von oder zu der Vorrichtung (1), **dadurch gekennzeichnet, dass** das Material des Gehäusebauteils (2) wenigstens im Bereich der Anschlussbohrung (12, 14) aus einem Thermoplast in Form von PPA (Polyphthalamid) besteht.

2. Gehäusebauteil nach Anspruch 1, **dadurch gekennzeichnet, dass** es vollständig aus dem PPA (Polyphthalamid)-Kunststoff gefertigt ist.

3. Gehäusebauteil nach einem der vorhergehenden Ansprüche, **dadurch gekennzeichnet, dass** der PPA (Polyphthalamid)-Thermoplast faserverstärkt ist.

4. Gehäusebauteil nach Anspruch 4, **dadurch gekennzeichnet, dass** der PPA (Polyphthalamid)-Thermoplast glasfaserverstärkt ist, mit 30-65 Gew.-% Glasfaserverstärkung.

5. Gehäusebauteil nach einem der vorhergehenden Ansprüche, **dadurch gekennzeichnet, dass** es ein Spritzgussformling ist.

6. Gehäusebauteil nach einem der vorhergehenden Ansprüche, **dadurch gekennzeichnet, dass** der PPA (Polyphthalamid)-Thermoplast wenigstens einige der folgende Eigenschaften aufweist: Einen Zug-E-Modul von wenigstens 17500 MPa, eine Bruchfestigkeit von wenigstens 240 MPa, eine Bruchdehnung von 2%, eine Schlagzähigkeit von 80 kJ/m², eine Kerbschlagzähigkeit von 11 kJ/ m², eine Kugeldruckhärte von wenigstens 340 Mpa, eine Schmelztemperatur von wenigstens 325° C, eine Formbeständigkeit HDT/A bis wenigstens 285° C, eine thermische Längenausdehnung längs von höchstens 0,15 10⁻⁴/K, eine thermische Längenausdehnung quer von höchstens 0,40 10⁻⁴/K, eine Dichte von wenigstens 1,65 g/cm³, eine Wasseraufnahme von höchstens 3,0 %, eine Feuchtigkeitsaufnahme von höchstens 1,3 %.

7. Gehäusebauteil nach einem der vorhergehenden Ansprüche, **dadurch gekennzeichnet, dass** es wenigstens ein integriertes Schraubauge (18) zum Durchführen einer Schraube oder eines Bolzens zur Befestigung der Vorrichtung an einer Struktur des Fahrzeugs aufweist, wobei das Material wenigstens im Bereich des Schraubauges (18) aus dem Thermoplast in Form von PPA (Polyphthalamid) besteht.

8. Druckmittel führende Einrichtung eines Fahrzeugs, **dadurch gekennzeichnet, dass** sie wenigstens ein Gehäuse (10) mit wenigstens einem Gehäusebauteil (2) nach einem der vorhergehenden Ansprüche aufweist.

9. Druckmittel führende Einrichtung eines Fahrzeugs nach Anspruch 8, **dadurch gekennzeichnet, dass** neben dem einen Gehäusebauteil (2) wenigstens ein weiteres Gehäusebauteil oder sämtliche Gehäusebauteile (2, 4, 6, 8) des Gehäuses (10) der Druckmittel führenden Einrichtung (1) aus dem PPA (Polyphthalamid)-Thermoplast bestehen.

10. Druckmittel führende Einrichtung nach Anspruch 8 oder 9, **dadurch gekennzeichnet, dass** sie eine Druckluft oder Hydraulikflüssigkeit als Druckmittel führende Ventileinrichtung (1) ist.

11. Druckmittel führende Einrichtung nach einem der Ansprüche 8 bis 10, **dadurch gekennzeichnet, dass** sie eine der folgenden Einrichtungen ist: Ein ABS-Drucksteuerventil (1), ein ASR-Ventil, ein Relaisventil, ein Mehrwegeventil, ein Mehrwege-Magnetventil, ein Bremsventil, ein Luftaufbereitungsventil, ein Auxiliary-Ventil, ein Anhänger-EBS-Ventil, ein Zugfahrzeug-EBS-Ventil, ein Kupplungssteller.

12. Druckmittel führende Einrichtung nach Anspruch 11, **dadurch gekennzeichnet, dass** sie durch ein ABS-Drucksteuerventil (1) einer Betriebsbremseinrichtung eines Fahrzeugs gebildet wird, welches eine erste Anschlussbohrung (12) zur Zufuhr des Druckmittels von einer Druckmittelquelle und eine zweite Anschlussbohrung (14) zum Abführen des Druckmittels in einen druckmittelbetätigten Bremsaktuator aufweist.

## Claims

1. Housing component (2) of a housing (10) of a pressure medium-conducting apparatus (1) of a vehicle, having at least one connector bore (12, 14) which is equipped with a female thread and which serves for the screwing-in of a connector element equipped with a male thread for the feed and/or discharge of the pressure medium to or from the apparatus (1), **characterised in that** the material of the housing component (2) is composed, at least in the region of the connector bore (12, 14), of a thermoplastic in the form of PPA (polyphthalamide).

2. Housing component according to claim 1, **characterised in that** it is manufactured entirely from the PPA (polyphthalamide) plastic.

3. Housing component according to any of the preceding claims, **characterised in that** the PPA (polyphthalamide) thermoplastic is fibre-reinforced.

4. Housing component according to claim 4, **characterised in that** the PPA (polyphthalamide) thermoplastic is glass fibre-reinforced, with 30-65 wt.% glass fibre reinforcement.

5. Housing component according to claim 1, **characterised in that** it is an injection moulding.

6. Housing component according to any of the preceding claims, **characterised in that** the PPA (polyphthalamide) thermoplastic has at least one of the following characteristics: a tensile modulus of elasticity of at least 17,500 MPa, a breaking strength of at least 240 MPa, an elongation at break of 2%, an impact strength of 80 kJ/m², a notched impact strength of 11 kJ/m², a ball impression hardness of at least 340 MPa, a melting temperature of at least 325°C, a dimensional stability HDT/A up to at least 285°C, a thermal longitudinal expansion longitudinally of at most 0.15 10⁻⁴/K, a thermal longitudinal expansion transversely of at most 0.40 10⁻⁴/K, a density of at least 1.65 g/cm³, a water absorption of at most 3.0%, a moisture absorption of at most 1.3%.

7. Housing component according to any of the preceding claims, **characterised in that** it has at least one integrated screw eyelet (18) for the passage of a screw or of a bolt for fastening of the apparatus to a structure of the vehicle, wherein the material at least in the region of the screw eyelet (18) is composed of the thermoplastic in the form of PPA (polyphthalamide).

8. Pressure medium-conducting device of a vehicle, **characterised in that** it has at least one housing (10) having at least one housing component (2) according to any of the preceding claims.

9. Pressure medium-conducting device of a vehicle according to claim 8, **characterised in that,** aside from said one housing component (2), at least one further housing component or all housing components (2, 4, 6, 8) of the housing (10) of the pressure medium-conducting device (1) is/are composed of the PPA (polyphthalamide) thermoplastic.

10. Pressure medium-conducting device according to claim 8 or 9, **characterised in that** it is a valve device (1) which conducts compressed air or hydraulic fluid as pressure medium.

11. Pressure medium-conducting device according to claim any of claims 8 to 10, **characterised in that** it is one of the following devices: an ABS pressure control valve (1), an ASR valve, a relay valve, a multi-way valve, a multi-way solenoid valve, a brake valve, an air treatment valve, an auxiliary valve, a trailer EBS valve, a tractor vehicle EBS valve, a clutch actuator.

12. Pressure medium-conducting device according to claim 11, **characterised in that** it is represented by an ABS pressure control valve (1) of a service brake device of a vehicle, which ABS pressure control valve has a first connector bore (12) for the feed of the pressure medium from a pressure medium source and a second connector bore (14) for the discharge of the pressure medium into a pressure medium-operated brake actuator.

## Revendications

1. Elément (2) d'un carter (10) d'un système (1) acheminant un fluide sous pression d'un véhicule, comprenant au moins un trou (12, 14) de raccordement pourvu d'un filetage intérieur pour le vissage d'un élément de raccordement pourvu d'un filetage extérieur, afin d'envoyer et/ou d'évacuer le fluide sous pression à ou du dispositif (1), **caractérisé en ce que** le matériau de l'élément (2) du carter est, au moins dans la région du trou (12, 14) de raccordement, constitué d'une matière thermoplastique sous la forme de PPA (polyphthalamide).

2. Elément de carter suivant la revendication 1, **caractérisé en ce qu'**il est fabriqué entièrement en matière thermoplastique PPA (polyphthalamide).

3. Elément de carter suivant l'une des revendications précédentes, **caractérisé en ce que** la matière thermoplastique PPA (polyphthalamide) est renforcée par de la fibre.

4. Elément de carter suivant la revendication 3, **caractérisé en ce que** la matière thermoplastique PPA (polyphthalamide) est renforcée par de la fibre de verre avec de 30 à 65% en poids de renfort en fibre de verre.

5. Elément de carter suivant l'une des revendications précédentes, **caractérisé en ce que** c'est une ébauche moulée par injection.

6. Elément de carter suivant l'une des revendications précédentes, **caractérisé en ce que** la matière thermoplastique PPA (polyphthalamide) a au moins certaines des propriétés suivantes : un module de traction E d'au moins 17.500 MPa, une résistance à la rupture d'au moins 240 MPa, un allongement à la rupture de 2%, une résistance au choc de 80 kJ/m², une résistance au choc avec entaille de 11 kJ/m², une dureté à la bille d'au moins 340 MPa, un point de fusion d'au moins 325°C, une stabilité de forme HDT/A jusqu'à au moins 285°C, un allongement thermique linéaire longitudinal d'au plus 0,15 10⁻⁴/K, un allongement thermique linéaire transversal d'au plus 0,40 10⁻⁴/K, une masse volumique d'au moins 1,65 g/cm³, une absorption d'eau d'au plus 3,0%, une absorption d'humidité d'au plus 1,3%.

7. Elément de carter suivant l'une des revendications précédentes, **caractérisé en ce qu'**il a au moins un œil (18) de vis intégré pour le passage d'une vis ou d'un boulon, afin de fixer le dispositif à une structure du véhicule, le matériau, au moins dans la région de l'œil (18) de vis, étant en une matière thermoplastique sous forme de PPA (polyphthalamide).

8. Dispositif acheminant un fluide sous pression d'un véhicule, **caractérisé en ce qu'**il a au moins un carter (10), ayant au moins un élément (2) de carter suivant l'une des revendications précédentes.

9. Dispositif acheminant un fluide sous pression d'un véhicule suivant la revendication 8, **caractérisé en ce qu'**outre un élément (2) du carter, au moins un autre élément du carter ou tous les éléments (2, 4, 6, 8) du carter (10) du dispositif (1) acheminant un fluide sous pression sont en la matière thermoplastique PPA (polyphtalamide).

10. Dispositif acheminant un fluide sous pression d'un véhicule suivant la revendication 8 ou 9, **caractérisé en ce que** c'est un dispositif (1) de vanne acheminant de l'air comprimé ou un liquide hydraulique, comme fluide sous pression.

11. Dispositif acheminant un fluide sous pression d'un véhicule suivant l'une des revendications 8 à 10, **caractérisé en ce que** c'est l'un des dispositifs suivants : une vanne (1) de commande de pression ABS, une vanne ASR, une vanne relais, une vanne à plusieurs voies, une électrovanne à plusieurs voies, une vanne de frein, une vanne de traitement d'air, une vanne auxiliaire, une vanne EBS de remorque, une vanne EBS de véhicule de traction, un diaphragme d'embrayage.

12. Dispositif acheminant un fluide sous pression d'un véhicule suivant la revendication 11, **caractérisé en ce qu'**il est formé par une vanne (1) de commande de pression ABS d'un dispositif de frein de service d'un véhicule, qui a un premier trou (12) de raccordement pour envoyer du fluide sous pression d'une source de fluide sous pression et un deuxième trou (14) de raccordement pour évacuer le fluide sous pression dans un actionneur de frein à actionnement par fluide sous pression.
